# EUROPÄISCHE PATENTSCHRIFT

(11) **EP 4 031 829 B1**
(45) Veröffentlichungstag und Bekanntmachung des Hinweises auf die Patenterteilung: **21.02.2024**
(21) Anmeldenummer: 20767516.6
(22) Anmeldetag: 02.09.2020
(51) Int. Cl.: F42B 14/06

(54) **TREIBKÄFIG VOM PUSH-PULL-TYP MIT VON EINANDER GETRENNTEN TEILEN FÜR DIE PUSH- UND PULL-FUNKTION**
SABOT OF THE PUSH-PULL TYPE COMPRISING SEPARATE PARTS FOR THE PUSH AND PULL FUNCTION
SABOT DE TYPE PUSH-PULL COMPRENANT DES PORTIONS SÉPARÉES POUR LES FONCTIONS PUSH ET PULL

(30) Priorität: 18.09.2019 DE 102019125128
(43) Veröffentlichungstag der Anmeldung: 27.07.2022
(73) Patentinhaber: Rheinmetall Waffe Munition GmbH, 29345 Südheide/Unterlüss (DE)
(72) Erfinder: KELLER, Ulrich, 29345 Südheide (DE); GOWIN, Michael, 29320 Hermannsburg (DE); ARTZ, Konstantin, 29352 Adelheidsdorf (DE)
(74) Vertreter: DREISS Patentanwälte PartG mbB
(86) Internationale Anmeldenummer: PCT/EP2020/074420
(87) Internationale Veröffentlichungsnummer: WO 2021/052755

(56) Entgegenhaltungen:
- EP-A1- 1 584 887
- DE-A1- 3 930 255
- DE-A1- 4 012 154
- US-A- 3 762 332

## Beschreibung

Die Erfindung beschäftigt sich mit einem Treibkäfig für eine unterkalibrige Munition bzw. ein unterkalibriges Geschoss, beispielsweise einem Wuchtgeschoss. Die Erfindung betrifft insbesondere die Aufteilung einer Push-Funktion und einer Pull-Funktion des Treibkäfigs mit dem Ziel der Reduzierung des Gewichts des Treibkäfigs.

Treibkäfige erfüllen die Aufgabe, einen zwischen einem Geschoss und einer Rohrinnenwand verbleibenden, in der Regel ringförmigen, Spalt abzudichten, um die Treibgase der Waffe effektiv zum Antrieb des Geschosses ausnutzen zu können. Des Weiteren übernimmt ein Treibkäfig die Funktion der Geschossführung im Waffenrohr, sodass dieses Geschoss der Rohrseelenachse ohne seitliche Auslenkung präzise folgt. Bei stark unterkalibrigen Geschossen muss ein Treibkäfig zudem das Geschoss bei der Beschleunigung im Waffenrohr stützen, wobei die über den Treibkäfig in das Geschoss eingeleitete Kraft über einen größeren Bereich der Geschosslänge verteilt wird. Anderenfalls würde ein solches Geschoss bei einer punktförmigen Krafteinleitung unter der Wirkung von Trägheitsmomenten kollabieren.

Das Ablösen vor der Rohrmündung wird dadurch ermöglicht, dass der Treibkäfig häufig in mehrere Segmente aufgeteilt wird, die sich, beginnend von der Spitze aus, radial vom Geschoss ablösen, sobald diese Segmente nicht mehr von der Rohrinnenwand in radialer Richtung zusammengehalten werden. Eine solche Segmentierung wirkt sich auf die axiale Kraftübertragung nicht negativ aus, da diese parallel zum Kraftfluss verläuft.

Bekannt für eine Hochleistungswuchtmunition sind Treibkäfige, bei denen ein Druckflansch ziemlich in der Mitte eines langgezogenen, pfeilartigen Fluggeschosses liegt. Der vor diesem Druckflansch liegende Teil des Treibkäfigs beschleunigt das Geschoss über Druck, der dahinter liegende Teil des Treibkäfigs über Zug. Auf den Zug wirkt zusätzlich noch der Treibladungsgasdruck. Der Druckteil, d. h. der vor dem Druckflansch liegende Teil, ist frei von äußeren Belastungen. In der Praxis werden derartige Treibkäfige auch als Push-Pull-Treibkäfige bezeichnet.

Weiterhin kommen auch reine Push-Treibkäfige oder reine Pull-Treibkäfige vor. Der Druckflansch des Treibkäfigs liegt dabei entweder hinter bzw. vor dem eigentlichen Treibkäfig. Um eine möglichst geringe Treibkäfigmasse zu realisieren, sind sowohl Push- und/oder Pull-Treibkäfigs formoptimiert. Zudem werden hochfeste Werkstoffe verwendet. Hierdurch wird der Werkstoff in einem hohen Maße, möglichst gleichmäßig, beansprucht.

So beschreibt die DE 38 43 566 C1 einen segmentierten Treibkäfig, der als üblicher Pull-Treibkäfig mit nur einem vorderen Führungsteil und ggf. rückwärtigen Führungsstreben ausgebildet ist.

Die US 3 762 332 A lehrt einen Treibkäfig umfassend zwei voneinander getrennte Teile, die beide halbschalenförmig ausgebildet sind und von den Treibladungsgasen beaufschlagt werden. Ein radial inneres Teil ist mit dem Projektil verbunden und von einem konzentrisch ausgebildeten radial äußeren Teil umgeben, welches in einem hinteren Teil gegen das Projektil anliegt. Das radial äußere Teil weist keine kraftübertragende Verbindung mit dem Geschoss auf und erfüllt daher werder eine Push-Funktion noch eine Pull-Funktion. Mit der in der US 3 762 332 A genannten Erfindung soll eine ungewünschte Verformung des Geschossheckteils vermieden werden.

Aus der EP 1 584 887 A1 ist ein einteiliger Treibkäfig bekannt, der ein separates vorderes Führungsteil aufweist. Die beiden Teile können ineinander geschoben werden. Das Führungsteil weist keine gasdruckübertragende Funktion auf und erfüllt daher weder eine Push- noch eine Pull-Funktion. Zudem sind die beiden Teile im Betriebszustand nicht voneinander getrennt, sondern miteinander verbunden, z.B. verklebt.

Die DE 39 20 254 C2 bezeichnet einen Zweiflansch-Treibkäfig (Push-Pull-Treibkäfig) mit einem vorderseitigen kalibergroßen Führungsflansch und rückwärtigen kalibergroßen Druckflansch als zum Stand der Technik gehörend.

Die DE 39 30 255 C2 beschäftigt sich mit einer Wuchtgeschossanordnung mit einem einteiligen Zweiflansch-Treibkäfig (Push-Pull-Treibkäfig) bei einer Ausführungsform und Einen segmentierten Zweiflansch-Treibkäfig offenbart die DE 10 2005 055 503 A1. Der Treibkäfig umfasst ein über die Längsachse des Geschosses formschlüssig anliegendes, schalenförmig ausgebildetes mittleres Treibkäfigteil. Um auf einfache Art und Weise zu erreichen, dass der Treibkäfig gegenüber vergleichbaren Treibkäfigen bei gleicher Biegefestigkeit ein geringeres Gewicht aufweist, wird vorgeschlagen, die beiden Flansche des Treibkäfigs zusätzlich zu dem mittleren Treibkäfigteil über seitliche Streben miteinander zu verbinden. Jedem Treibkäfigsegment ist dabei mindestens eine Strebe zugeordnet.

Einen segmentierten Treibkäfig mit Sollbruchstellen beschreibt die DE 10 2005 055 504 A1. Der Treibkäfig weist einen vorderen Führungsflansch und einen hinteren Druckflansch auf. Durch die Sollbruchstelle ergibt sich ein perforierter Gewindebereich. Nach dem Einschrauben des Penetrators in den Treibkäfig werden diese axialen Sollbruchstellen bzw. Trennfugen durch Vulkanisierung mit einem Vulkanisat verschlossen. Das Ablöseverhalten der Treibkäfigsegmente wird hauptsächlich von den Eigenschaften des Vulkanisats im Abschussfall bestimmt.

Ein Treibkäfigfluggeschoss wird des Weiteren in der DE 10 2008 029 394 A1 publiziert. Der Führungskäfig besteht hierbei aus Kunststoff. Um eine steife radiale Führung des Geschosskörpers sicherzustellen besteht der Führungskäfig aus einem faserverstärkten Kunststoff und einer Stützwand aus einem Metall, bevorzugt aus einer Aluminiumlegierung. Beide Teile werden form- und/oder kraftschlüssig miteinander verbunden.

Aus der DE 10 2013 006 498 A1 ist ein Treibkäfiggeschoss bekannt, das sich dadurch auszeichnet, dass als Führungselement eine schmale segmentierte Stahlscheibe verwendet wird, die auf der dem Führungskäfig zugwandten Seite mit einem segmentierten, hohlzylinderförmigen Verkleidungsteil aus Kunststoff form- und/oder kraftschlüssig verbunden ist.

Der Raum unter dem Druckflansch ist bei einem Push-Pull-Treibkäfig in seiner Form kaum zu optimieren, da dieser Bereich fertigungstechnisch mit Aussparungen schwer zu erreichen ist. Eine Gusslösung schließt sich aus, da die damit verbundenen mechanischen Eigenschaften schlechter sind als die einer entsprechenden Knetlegierung. Der Push-Teil des Treibkäfigs selbst ist nicht sehr effizient. Weil dieser Treibkäfig aus Massegründen aus erheblich nachgiebigerem Material als das Geschoss gefertigt ist, muss dieser als Ausgleich einen großen Querschnitt haben, um das Geschoss überhaupt wirksam stützen zu können. Diese Lösung ist konträr zu der Massenoptimierung des Treibkäfigs.

Die Erfindung stellt sich daher die Aufgabe, eine Möglichkeit zur Massenminimierung eines Treibkäfigs aufzuzeigen.

Gelöst wird die Aufgabe durch die Merkmale des Patentanspruchs 1. Vorteilhafte Ausgestaltungen sind den Unteransprüchen entnehmbar.

Der Erfindung liegt die Idee zugrunde, einen Treibkäfig derart zu gestalten, dass dieser zum einen eine Push-Funktion und zum anderen eine Pull-Funktion hat, wobei diese Funktionen unabhängig voneinander wirken bzw. vorliegen. In Folge dieser Gestaltung findet eine Trennung der Push-Funktion und der Pull-Funktion am Treibkäfig statt. Der Treibkäfig wird für die Trennung der Funktion in Treibkäfigteile mechanisch dahingehend aufgeteilt bzw. aufgetrennt, dass zumindest ein Treibkäfigteil die Pull-Funktion und zumindest ein weiterer Treibkäfigteil die Push-Funktion übernehmen. Die Treibkäfigteile sind ihrerseits über eine formschlüssige Verbindung mit einem Geschoss verbunden. Zwischen den Treibkäfigteilen besteht hingegen keine formschlüssige Verbindung.

Zu diesem Zweck besteht der Treibkäfig in einer ersten Ausführung aus zwei ineinander geschachtelten Treibkäfigteilen, einem inneren Treibkäfigteil und einem äußeren Treibkäfigteil. Der äußere Treibkäfigteil umschließt den inneren Treibkäfigteil. Dabei bilden die Treibkäfigteile eine Schnittstelle. Die Schnittstelle der beiden Treibkäfigteile sollte bevorzugt zylinderförmig gewählt werden, damit sie relativ einfach gefertigt werden kann. Dadurch ergibt sich eine zylindrische Schachtelung derTreibkäfigteile.

Die Treibkäfigteile können ihrerseits segmentiert sein. Eine tangentiale Segmentierung der Treibkäfigteile für ein Ablösen der Treibkäfigsegmente vom Geschoss bzw. Penetrator bleibt von dieser, bevorzugt zylindrischen, Schachtelung unberührt.

Von Vorteil ist, dass über die Schnittstelle keine axialen Kräfte übertragen werden, sodass auch an die axiale Positionierung der Treibkäfigteile keine hohen Anforderungen gestellt werden. Ein radialer Spalt zwischen dem inneren und dem äußeren Treibkäfigteil ist bevorzugt klein zu wählen. Das vermeidet Undichtigkeiten. Alternativ kann aber auch eine zusätzliche Dichtung gegen einen hohen Treibladungsgasdruck vorgesehen werden.

Der innere Treibkäfigteil übernimmt die Pull-Funktion, der äußere Treibkäfigteil die Push-Funktion des Treibkäfigs. Die Treibkäfigteile haben voneinander unabhängige Flächen, auf die die Treibladungsgase wirken. Dabei sollte die Fläche des Push-Treibkäfigteils klein oder gering gehalten werden. Bevorzugt bilden diese eine übergangslose gemeinsame Fläche des Treibkäfigs, auf die die Treibladungsgase wirken können. Diese Fläche sollte derart ausgebildet sein, dass sie einem (mittig) abgeschnittenen (einschaligen) Hyperboloid nachempfunden ist. Alternative Formen sind ebenfalls möglich.

Es findet kein Kräfteaustausch zwischen den beiden Treibkäfigteilen, mit Ausnahme von geringen Reibkräften, statt. Dadurch kann die Tragfähigkeit von beiden Treibkäfigteilen unabhängig voneinander voll ausgenutzt werden. Die Wahl des Teilungsdurchmessers bestimmt die Lastverteilung zwischen den beiden Treibkäfigteilen. Dieser Teilungsdurchmesser entspricht dem Außendurchmesser des Innentreibkäfigteils bzw. dem Innendurchmesser des Außentreibkäfigteils.

In einerweiteren Ausführung wird eine tangentiale Schachtelung der Treibkäfigteile bevorzugt. Der kombinierbare Push-Pull-Treibkäfig kann typischerweise in drei Segmente von je 120° unterteilt sein, die nach dem Mündungsdurchgang ein Ablösen vom Fluggeschoss ermöglichen.

In einer bevorzugten Ausführung werden in tangentialer Richtung je ein Push- und ein Pull-Treibkäfigteilsegment im Wechsel geschachtelt. Eine sinnvolle Anzahl bzw. Menge sind z.B. je drei Treibkäfigteilsegmente. Es sind aber auch andere Anzahlen an Treibkäfigteilsegmenten möglich.

Jeder Treibkäfigteil bzw. jedes Treibkäfigteilsegment hat seine eigene Fläche, auf die die Treibladungsgase wirken, und daraus die auf das Fluggeschoss zu übertragene Antriebskraft resultiert. Bei dem Push-Treibkäfig bzw. den Push-Treibkäfigteilsegmenten sind diese Flächen gerade, und bevorzugt glatt. Die Fläche des Pull-Teil-Treibkäfigs bzw. der Pull-Treibkäfigteilsegmente kann mit einem (mittig) abgeschnittenen (einschaligen) Hyperboloid verglichen werden. Alternative Formen sind jedoch auch möglich.

Mit Ausnahme von geringen Reibkräften findet auch hier kein Kräfteausgleich zwischen den Treibkäfigteilen bzw. Treibkäfigteilsegmenten statt. Dadurch kann auch bei dieser Variante die Tragfähigkeit jedes Treibkäfigteils voll ausgenutzt werden. Die Wahl der jeweiligen Segmentwinkel bestimmt die Lastverteilung zwischen den beiden Funktionsgruppen (Summe der Pull- und Summe der Push-Treibkäfigteilsegmente). Die Schnittstelle unterscheidet sich prinzipiell nicht von bisher notwendigen Teilungen. Allerdings erhöht sich die Anzahl der Trennflächen. Die in Kontakt stehenden Flächen sind kleiner, weil sich die Treibkäfigteile bzw. Treibkäfigteilsegmente nur geringfügig überlappen. Dieser Überlappungsbereich ist für eine Abdichtung notwendig.

Die Fertigung und die Möglichkeit zur Formoptimierung werden nunmehr wegen der Teilung des Treibkäfigs in eine Pull-Funktion und in eine Push-Funktion einfacher und besser. Die Vereinfachung der Fertigung ergibt sich z.B. durch kürzere Bauteile des Treibkäfigs bzw. der Treibkäfigteile bzw. der Treibkäfigteilsegmente. Es werden nur noch an die, bevorzugt zylindrische, Passung bzw. Schnittstelle zwischen den beiden Treibkäfigteilen hohe Anforderungen bezüglich Genauigkeit gestellt. Der Einsatz von unterschiedlichen Werkstoffen für den Treibkäfigteil mit Pull-Funktion und den Treibkäfigteil mit Push-Funktion wird vereinfacht. Diese Werkstoffe können hinsichtlich ihrer mechanischen Eigenschaften jeweils passend zu den unterschiedlichen Anforderungen (Pull-Funktion, Push-Funktion) an den jeweiligen Treibkäfigteil ausgewählt werden.

Aufgrund der Tatsache, dass die Effizienz des unabhängig vom Pull-Treibkäfigteil funktionierenden bzw. wirkenden Push-Treibkäfigteils gesteigert wird, kann der (Gesamt-)Treibkäfig in beiden Ausführungen leichter als bisherige Lösungen konstruiert werden. Das Potential zur Gewichtseinsparung ist damit sehr hoch. Dieses resultiert insbesondere auch daraus, weil nur zwei "halbe" Treibkäfige verwendet und diese ineinander oder im Wechsel in Umfangsrichtung geschachtelt werden.

Wie bei gekannten Treibkäfigen können Taschen in den Push-Teilen des Treibkäfigs eingebracht sein.

Geschaffen wird somit ein kombinierbarer Push-Pull-Treibkäfig, der in einfacher Art und Weise herstellbar ist, der entsprechend seiner priorisierten Aufgabe bzw. Anforderungen ausgestaltet und der zusätzlich leichter ausgeführt werden kann.

Zur Reduzierung der Masse eines Treibkäfigs mit einer Pull- und einer Push-Funktion, wird vorgeschlagen, dass der Treibkäfig voneinander getrennte Treibkäfigteile umfasst, wobei zumindest ein Treibkäfigteil derart ausgeführt ist, dass dieser die Pull-Funktion übernimmt, und wobei zumindest ein Treibkäfigteil derart ausgeführt ist, dass dieser die Push-Funktion übernimmt. Dazu werden die Treibkäfigteile geschachtelt. Das kann in Form einer zylindrischen Schachtelung oder in Form einer tangentialen Schachtelung umgesetzt werden. Bei der zylindrischen Schachtelung umschließt der äußere Treibkäfigteil den inneren Treibkäfigteil entlang einer Schnittstelle. Bei der tangentialen Schachtelung sind die Treibkäfigteile in Treibkäfigteilsegmente unterteilt. Diese werden in tangentialer Richtung abwechselnd geschachtelt, sodass immer abwechselnd ein Pull-Treibkäfigteilsegment und ein Push-Treibkäfigteilsegment im Wechsel in Umfangsrichtung geschachtelt werden. Zur ausreichenden Abdichtung überlappen sich die Treibkäfigteile bzw. Treibkäfigteilsegmente.

Nicht ausgeschlossen ist auch eine Kombination von zylindrischer und tangentialer Schachtelung.

Anhand eines Ausführungsbeispiels mit Zeichnung soll die Erfindung näher schrieben werden. Auf die Darstellung von möglicher Führungs- und/oder Dichtungsbänder ist der Übersicht halber verzichtet worden.

### Es zeigen:

- Fig. 1: eine Halbschnittdarstellung von Geschoss, Treibkäfigteilen und Waffenrohr in einem ersten Ausführungsbeispiel,
- Fig. 2: eine Darstellung des Treibkäfigs und des Geschosses im Waffenrohr im Schnitt nach Fig. 1,
- Fig. 3: eine Darstellung eines Geschosses, eines Treibkäfigs sowie Waffenrohr in einem weiteren Ausführungsbeispiels,
- Fig. 4: eine Schnittdarstellung aus Fig. 3.

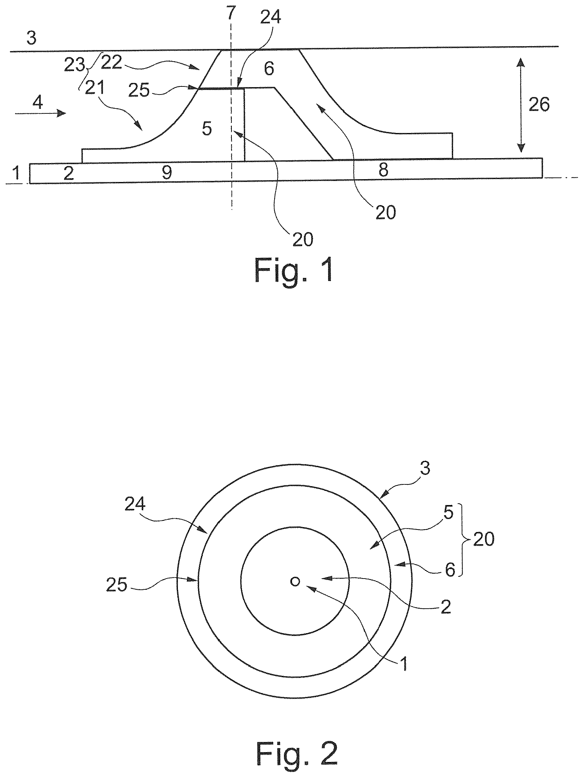

Die Erfindung ist in Fig. 1 axialsymmetrisch und skizzenhaft dargestellt. Eine Rotationsachse ist mit 1 gekennzeichnet. Ein unterkalibriges Geschoss 2 weist einen deutlich kleineren Durchmesser als der Innendurchmesserdes Waffenrohres 3 auf (Fig. 2). Einen verbleibenden Raum 26 zwischen der Geschoss 2 und dem Waffenrohr 3 füllt ein Treibkäfig 20 aus.

Der Treibkäfig 20 besteht aus Treibkäfigteilen 5, 6, zumindest aus zwei. Die Treibkäfigteile 5, 6 sind nicht einteilig sondern voneinander getrennt. Sie sind ineinander verschachtelt. Der Teiltreibkäfigteil 5 bildet einen Innentreibkäfig und der Teiltreibkäfigteil 6 einen Außentreibkäfig. Der Innentreibkäfig 5 übernimmt dabei die Pull-Funktion und der Außentreibkäfig 6 die Push-Funktion des (Gesamt-)Treibkäfigs 20. Durch diesen konstruktiven Aufbau können die Treibkäfigteile 5, 6 beispielsweise aus unterschiedlichen Materialien bestehen.

Eine Schnittstelle 24 der beiden Treibkäfigteile 5, 6 ist bevorzugt zylinderförmig. Ein radialer Spalt 25 im Bereich der Schnittstelle 24 zwischen dem inneren 5 und dem äußeren Treibkäfigteil 6 ist bevorzugt klein zu wählen.

Die Treibkäfigteile 5, 6 haben voneinander unabhängige (getrennte) Flächen 21, 22, auf die die Treibladungsgase wirken und daraus die auf das Geschoss 2 zu übertragene Antriebskraft resultiert. Die Flächen 21, 22 gehen bevorzugt derart ineinander über, dass eine gemeinsame, bevorzugt glatte, Fläche 23 des Treibkäfigs 20 gebildet wird. Die Flächen 21, 22 der Treibkäfigteilsegmente 5, 6 bilden eine (mittig) abgeschnittenen (einschaligen) Hyperboloid. Alternative Formen sind jedoch auch möglich.

Es findet kein Kräfteaustausch zwischen den beiden Treibkäfigteilen 5, 6 statt, mit Ausnahme von geringen Reibkräften. Dadurch kann die Tragfähigkeit von beiden Treibkäfigteile 5, 6 unabhängig voneinander voll ausgenutzt werden.

Zwischen den beiden Treibkäfigteilen 5, 6 und dem Geschoss 2 besteht jeweils eine formschlüssige Verbindung 8, 9, die nicht näher dargestellt sind, aber in Form eines Gewindes möglich ist, wie in der Praxis häufig angewendet. Zwischen den Treibkäfigteilen 5 und 6 besteht hingegen keine formschlüssige Verbindung, d.h. es besteht kein Formschluss zwischen den Treibkäfigteilen 5, 6.

Durch einen hinter dem Geschoss 2 wirkenden Treibladungsdruck 4 wird das Geschoss 2 in bekannter Art und Weise in Schussrichtung beschleunigt, in der Darstellung gemäß Fig. 1 nach rechts. Für die auf die Geschossteile 2, 5, 6 wirkenden axialen Kräfte ist die projizierende Fläche ausschlaggebend. In der gewählten Schnittebene 7 entsprechen diese Flächen den Schnittflächen. Das unterkalibrige Geschoss 2 (Fig. 2) wird zu einem geringen Teil vom Gasdruck selbst angetrieben. Zudem wird das Geschoss 2 über den Innentreibkäfig 5 sowie den Außentreibkäfig 6, auf denen ebenfalls der Treibladungsdruck 4 wirkt, aus dem Waffenrohr 3 getrieben.

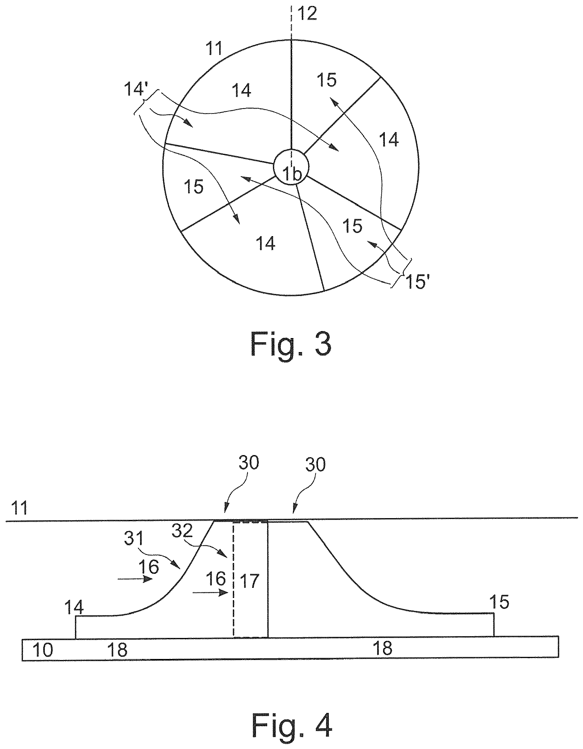

Eine weitere Ausführungsform ist in Fig. 3 dargestellt. Die Darstellung zeigt ein unterkalibriges Geschoss 10 mit einem Treibkäfig 30, von hinten in Schussrichtung gesehen. Dieser Treibkäfig 30 umfasst zumindest einen Treibkäfigteil 14' mit Pull-Funktion sowie zumindest einen Treibkäfigteil 15' mit Push-Funktion.

In einer bevorzugten Ausführung setzen sich diese Treibkäfigteile 14', 15' ihrerseits aus mehreren Treibkäfigteilsegmenten 14, 15 zusammen. Die Treibkäfigteilsegmente 14, 15 befinden sich im Zwischenraum von Geschoss 10 und Waffenrohr 11. Die Treibkäfigteilsegmente 14 übernehmen hierbei die Pull-Funktion und die Treibkäfigteilsegmente 15 die Push-Funktion des Treibkäfigs 30.

Bevorzugt werden in tangentialer Richtung je ein Push- und ein Pull-Treibkäfigsegment 14, 15 im Wechsel geschachtelt, sodass immer abwechselnd auf ein Pull-Treibkäfigteilsegment 14 in Umfangsrichtung ein Push-Treibkäfigteilsegment 15 folgt.

Die Anzahl und Segmentbreiten der Pull-Treibkäfigteilsegmente 14 sowie der Push-Treibkäfigteilsegmente 15 sind frei wählbar. Die Wahl der jeweiligen Segmentwinkel bestimmt die Lastverteilung zwischen den beiden Funktionsgruppen (Summe der Pull-Treibkäfigteilsegmente 14 bzw. Summe der Push-Treibkäfigteilsegmente 15). Dadurch kann der durch die Treibkäfigteilsegmente 14, 15 gebildete (Gesamt-)Treibkäfig 31 an die ihn gestellten Aufgaben bzw. Anforderungen individuell angepasst werden.

In der bevorzugten Ausführung sind je drei Treibkäfigteilsegmente 14, 15 von je 120° vorgesehen. In Summe umfasst der Treibkäfig 30 somit drei Pull-Treibkäfigteilsegmente 14 sowie drei Push-Treibkäfigteilsegmente 15.

Fig. 4 ist eine Schnittdarstellung entlang einer markierten Linie 12 (Fig.3). Dargestellt sind das Waffenrohr 11, das Fluggeschoss 10 sowie ein Pull-Treibkäfigteilsegment 14 und ein Push-Treibkäfigteilsegment 15 entsprechend der Linie 12.

Zwischen den beiden Treibkäfigteilsegmenten 14, 15 und dem Geschoss 10 besteht jeweils eine formschlüssige Verbindung 18, beispielsweise über ein Gewinde. Für eine ausreichende Abdichtung der Treibkäfigteilsegmente 14, 15 ist eine Überlappung 17 der Treibkäfigteilsegmente 14, 15 notwendig. Diese Überlappung 17 ist so groß zu wählen, dass die Abdichtung garantiert wird.

Jedes Treibkäfigteilsegment 14, 15 hat eine eigene Fläche 31, 32, auf die die Treibladungsgase 16 wirken, und daraus die auf das Geschoss 10 zu übertragende Antriebskraft resultiert. Auf der linken Seite der jeweiligen Treibkäfigteile 14', 15' wirkt der Treibladungsdruck 16, wodurch das Geschoss 2 in dieser Darstellung nach rechts beschleunigt wird. Dabei wirkt der Treibladungsdrucks 16 auf die Fläche 31 der Treibkäfigteilsegmente 14 sowie auf die Fläche 32 der Treibkäfigteilsegmente 15.

Bei den Push-Treibkäfigteilsegmenten 15 sind diese Flächen 32 gerade und bevorzugt glatt. Die Flächen 31 der Pull-Treibkäfigteilsegmente 14 kann mit einem (mittig) abgeschnittenen (einschaligen) Hyperboloid verglichen werden. Alternative Formen sind jedoch auch möglich.

### BEZUGSZEICHENLISTE

- 1: Rotationsachse
- 2: Geschoss (unterkalibrig)
- 3: Waffen rohr
- 4: Treibladungsdruck
- 5: Treibkäfigteil
- 6: Treibkäfigteil
- 7: Schnittebene
- 8: Verbindung
- 9: Verbindung
- 10: Geschoss (unterkalibrig)
- 11: Waffenrohr
- 12: Linie
- 14', 15': Treibkäfigteil
- 14: Treibkäfigteilsegment
- 15: Treibkäfigteilsegment
- 16: Treibladungsdruck
- 17: Überlappung
- 18: Verbindung
- 19: Verbindung
- 20: Treibkäfig
- 21: Fläche
- 22: Fläche
- 23: Fläche
- 24: Schnittstelle
- 25: Spalt
- 30: Treibkäfig
- 31: Fläche
- 32: Fläche

## Patentansprüche

1. Treibkäfig (20, 30) mit einer Push- und einer Pull-Funktion, **dadurch gekennzeichnet, dass** der Treibkäfig (20, 30) voneinander getrennte Treibkäfigteile (5, 6, 14, 14', 15, 15') umfasst, wobei zumindest ein Treibkäfigteil (5, 14, 14') derart ausgeführt ist, dass dieser die Pull-Funktion übernimmt, und wobei zumindest ein anderer Treibkäfigteil (6, 15, 15') derart ausgeführt ist, dass dieser die Push-Funktion übernimmt.

2. Treibkäfig (20, 30) nach Anspruch 1, **dadurch gekennzeichnet, dass** die Treibkäfigteile (5, 6, 14, 14', 15, 15') geschachtelt sind.

3. Treibkäfig (20, 30) nach Anspruch 1 oder 2, **dadurch gekennzeichnet, dass** der Treibkäfig (20, 30) zumindest zwei Treibkäfigteile (5, 6, 14, 14', 15, 15') umfasst.

4. Treibkäfig (20) nach Anspruch 2 oder 3, **gekennzeichnet durch** eine zylindrische Schachtelung.

5. Treibkäfig (20) nach einem der Ansprüche 1 bis 4, **dadurch gekennzeichnet, dass** zumindest ein Treibkäfigteil (5) mit Pull-Funktion einen Innentreibkäfig und zumindest ein Treibkäfigteil (6) mit Push-Funktion einen Außentreibkäfigbilden.

6. Treibkäfig (20) nach einem der Ansprüche 1 bis 5, **dadurch gekennzeichnet, dass** die Treibkäfigteile (5, 6) voneinander getrennte Flächen (21, 22) aufweisen, auf die Treibladungsgase (4) einwirken können.

7. Treibkäfig (20) nach Anspruch 6, **dadurch gekennzeichnet, dass** die Flächen (21, 22) derart zueinander verlaufen, dass sie eine gemeinsame Fläche (23) des Treibkäfigs (20) bilden, auf die Treibladungsgase einwirken können.

8. Treibkäfig (30) nach einem der Ansprüche 1 bis 7, **dadurch gekennzeichnet, dass** die Treibkäfigteile (14', 15') als in Umfangsrichtung aufeinanderfolgende Treibkäfigteilsegmente (14, 15) ausgebildet sind.

9. Treibkäfig (30) nach Anspruch 8, **dadurch gekennzeichnet, dass** in tangentialer Richtung je ein Push-Treibkäfigteilsegment (15) und ein Pull-Treibkäfigteilsegment (14) im Wechsel geschachtelt sind.

10. Treibkäfig (30) nach Anspruch 8 oder 9, **dadurch gekennzeichnet, dass** jeweils drei Treibkäfigteilsegmente (14) mit Pull-Funktion und drei Treibkäfigteilsegmente (15) mit Push-Funktion vorgesehen sind.

11. Treibkäfig (30) nach einem der Ansprüche 8 bis 10, **dadurch gekennzeichnet, dass** jedes Treibkäfigteilsegment (14, 15) eine eigene Fläche (31, 32) aufweist, auf die Treibladungsgase (16) wirken können.

12. Treibkäfig (20, 30) nach einem der Ansprüche 1 bis 11, **dadurch gekennzeichnet, dass** zwischen den Treibkäfigteilen (5, 14', 6, 15') keine formschlüssige Verbindung besteht.

13. Geschoss (2, 10) mit einem Treibkäfig (20, 30) nach einem der Ansprüche 1 bis 12.

14. Munition mit einem Geschoss (2, 10) und einem Treibkäfig (20, 30) nach einem der Ansprüche 1 bis 12.

## Claims

1. A sabot (20, 30) having a push and a pull function, **characterized in that** the sabot (20, 30) comprises separate sabot parts (5, 6, 14, 14', 15, 15'), at least one sabot part (5, 14, 14') being designed such that it assumes the pull function, and at least one other sabot part (6, 15, 15') being designed such that it assumes the push function.

2. The sabot (20, 30) according to claim 1, **characterized in that** the sabot parts (5, 6, 14, 14', 15, 15') are nested.

3. The sabot (20, 30) according to claim 1 or 2, **characterized in that** the sabot (20, 30) comprises at least two sabot parts (5, 6, 14, 14', 15, 15').

4. The sabot (20) according to claim 2 or 3, **characterized by** cylindrical nesting.

5. The sabot (20) according to any of claims 1 to 4, **characterized in that** at least one sabot part (5) having a pull function forms an inner sabot, and at least one sabot part (6) having a push function forms an outer sabot.

6. The sabot (20) according to any of claims 1 to 5, **characterized in that** the sabot parts (5, 6) have separate surfaces (21, 22) onto which propellant charge gases (4) can act.

7. The sabot (20) according to claim 6, **characterized in that** the surfaces (21, 22) extend with respect to one another in such a way that they form a common surface (23) of the sabot (20) onto which propellant charge gases can act.

8. The sabot (30) according to any of claims 1 to 7, **characterized in that** the sabot parts (14', 15') are designed as sabot part segments (14, 15) which are arranged in succession in the circumferential direction.

9. The sabot (30) according to claim 8, **characterized in that** a push sabot part segment (15) and a pull sabot part segment (14) are each alternately nested in the tangential direction.

10. The sabot (30) according to claim 8 or 9, **characterized in that** three sabot part segments (14) are provided with a pull function and three sabot part segments (15) are provided with a push function.

11. The sabot (30) according to any of claims 8 to 10, **characterized in that** each sabot part segment (14, 15) has its own surface (31, 32) onto which propellant charge gases (16) can act.

12. The sabot (20, 30) according to any of claims 1 to 11, **characterized in that** there is no interlocking connection between the sabot parts (5, 14', 6, 15').

13. A projectile (2, 10) having a sabot (20, 30) according to any of claims 1 to 12.

14. Ammunition having a projectile (2, 10) and a sabot (20, 30) according to any of claims 1 to 12.

## Revendications

1. Sabot (20, 30) avec une fonction pousser et une fonction tirer, **caractérisé en ce que** le sabot (20, 30) comprend des parties de sabot (5, 6, 14, 14', 15, 15') séparées les unes des autres, dans lequel au moins une partie de sabot (5, 14, 14') est conçue de telle sorte que celle-ci occupe la fonction tirer, et dans lequel au moins une autre partie de sabot (6, 15, 15') est conçue de telle sorte que celle-ci occupe la fonction pousser.

2. Sabot (20, 30) selon la revendication 1, **caractérisé en ce que** les parties de sabot (5, 6, 14, 14', 15, 15') sont emboîtées.

3. Sabot (20, 30) selon la revendication 1 ou 2, **caractérisé en ce que** le sabot (20, 30) comprend au moins deux parties de sabot (5, 6, 14, 14', 15, 15').

4. Sabot (20) selon la revendication 2 ou 3, **caractérisé par** un emboîtement cylindrique.

5. Sabot (20) selon l'une quelconque des revendications 1 à 4, **caractérisé en ce qu'**au moins une partie de sabot (5) avec la fonction tirer forme un sabot intérieur et au moins une partie de sabot (6) avec la fonction pousser un sabot extérieur.

6. Sabot (20) selon l'une quelconque des revendications 1 à 5, **caractérisé en ce que** les parties de sabot (5, 6) présentent des surfaces (21, 22) séparées l'une de l'autre, sur lesquelles des gaz de charge propulsive (4) peuvent agir.

7. Sabot (20) selon la revendication 6, **caractérisé en ce que** les surfaces (21, 22) s'étendent l'une vers l'autre de telle sorte qu'elles forment une surface (23) commune du sabot (20), sur laquelle des gaz de charge propulsive peuvent agir.

8. Sabot (30) selon l'une quelconque des revendications 1 à 7, **caractérisé en ce que** les parties de sabot (14', 15') sont réalisées sous la forme de segments de partie de sabot (14, 15) se succédant dans la direction périphérique.

9. Sabot (30) selon la revendication 8, **caractérisé en ce que** dans la direction tangentielle respectivement un segment de partie de sabot pousser (15) et un segment de partie de sabot tirer (14) sont emboîtés en alternance.

10. Sabot (30) selon la revendication 8 ou 9, **caractérisé en ce que** respectivement trois segments de partie de sabot (14) avec une fonction tirer et trois segments de partie de sabot (15) avec une fonction pousser sont prévus.

11. Sabot (30) selon l'une quelconque des revendications 8 à 10, **caractérisé en ce que** chaque segment de partie de sabot (14, 15) présente une surface propre (31, 32), sur laquelle des gaz de charge propulsive (16) peuvent agir.

12. Sabot (20, 30) selon l'une quelconque des revendications 1 à 11, **caractérisé en ce qu'**aucune liaison par coopération de formes n'est présente entre les parties de sabot (5, 14', 6, 15').

13. Projectile (2, 10) avec un sabot (20, 30) selon l'une quelconque des revendications 1 à 12.

14. Munition avec un projectile (2, 10) et un sabot (20, 30) selon l'une quelconque des revendications 1 à 12.
